Europäisches Patentamt

European Patent Office

Office européen des brevets

(19)

(11) **EP 0 757 897 A1**

(12) **EUROPÄISCHE PATENTANMELDUNG**

(43) Veröffentlichungstag:
 **12.02.1997 Patentblatt 1997/07**

(51) Int. Cl.$^6$: **A24C 5/34**

(21) Anmeldenummer: 96111800.7

(22) Anmeldetag: **23.07.1996**

(84) Benannte Vertragsstaaten:
 **AT BE CH DE ES FR GB IT LI NL SE**

(30) Priorität: **05.08.1995 DE 19528815**

(71) Anmelder: **Hauni Maschinenbau
 Aktiengesellschaft
 D-21033 Hamburg (DE)**

(72) Erfinder: **Schröder, Dierk, Dr.
 22399 Hamburg (DE)**

(54) **Verfahren zum optischen Prüfen von Zigaretten**

(57)   Es wird ein Verfahren zum optischen Prüfen der Umhüllung von stabförmigen Artikeln der tabakverarbeitenden Industrie, insbesondere von Zigaretten beschrieben. Die Artikel werden entlang einem Förderweg (D) queraxial durch eine Prüfzone (6) gefördert, in der die Oberfläche der Artikel mittels einer Lichtquelle (19) beleuchtet wird. Die beleuchteten Umfangsabschnitte (F) der Oberfläche werden zeilenweise abgetastet, und es werden dem am Umfang reflektierten Licht entsprechende, den Zustand der Artikeloberfläche repräsentierende Meßsignale erzeugt. Die Abtastung der Oberfläche erfolgt in gleichen Abständen $\Delta U$, wozu die Aufeinanderfolge der Abtastvorgänge in Abhängigkeit von der Winkelposition ($\phi$) der abgetasteten Umfangsabschnitte gesteuert wird. Gleichzeitig wird die Intensität der Lichtquelle (19) in Abhängigkeit von der Winkellage ($\phi$) der Umfangsabschnitte (F) in der Prüfzone gesteuert.

Der Vorteil des Verfahrens besteht darin, daß bei besserer Ausleuchtung der Zigaretten in der Prüfzone und einer gleichmäßigeren Abtastung ein wesentlich verbessertes Inspektionsergebnis erzielt wird.

Fig.2

EP 0 757 897 A1

**Beschreibung**

Die Erfindung betrifft ein Verfahren zum optischen Prüfen der Umhüllung von stabförmigen Artikeln der tabakverarbeitenden Industrie, insbesondere von Zigaretten, gemäß dem Oberbegriff des Anspruchs 1.

Unter stabförmigen Artikeln der tabakverarbeitenden Industrie sind im Zusammenhang mit der vorliegenden Erfindung alle aus Tabak, Tabakersatzstoffen und Filtermaterial hergestellten Erzeugnisse wie Zigaretten, Filterzigaretten, Zigarillos, Filterstäbe und dergleichen zu verstehen. Wenn im folgenden also nur noch von Zigaretten die Rede ist, so sind die anderen Artikel deswegen nicht ausgeschlossen.

Um optisch erkennbare Fehler der Zigarettenumhüllung, wie Löcher, Flecken, Klebstellen oder fehlende bzw. falsch aufgebrachte Stempelaufdrucke auf fertigen Einzelzigaretten zu ermitteln, ist durch die DE 28 40 617 A1 (≙ US 4 277 678) eine Prüfvorrichtung zum optischen Abtasten der Oberfläche von queraxial geförderten Zigaretten bekannt. Die Zigaretten werden in eine Prüfzone gefördert und dort unter Stillstand einmal um 360° um ihre Längsachse gedreht. Dabei wird ein Umfangsabschnitt der Zigarettenhülle, der sich im wesentlichen achsparallel zeilenartig über ihre gesamte Länge erstreckt, beleuchtet und mit einer das reflektierte Licht aufnehmenden Optik abgetastet. Dieses Vorgehen gewährleistet optimale optische Bedingungen für die zeilenweise Inspektion der Zigarettenhülle, weil der betrachtete Umfangsabschnitt immer in derselben Winkellage zur Zigarettenachse liegt und während der Messung bezüglich der Optik ortsfest bleibt. Das Drehen der Zigaretten um ihre Längsachse erfordert jedoch maschinenbaulichen Aufwand und belastet sie mechanisch nicht unerheblich, was Qualitätsminderungen zur Folge haben kann.

Wird eine zu prüfende Zigarette ohne Drehung oder Rollung durch eine Prüfzone hindurch bewegt und dabei ihre freiliegende Oberfläche in einem festen Abfragetakt zeilenweise optisch abgetastet, wie das beispielsweise aus der DE 30 30 140 C2 bekannt ist, so ergeben sich bei der Abbildung der aufeinanderfolgenden zeilenförmigen Umfangsabschnitte Abbildungsfehler, weil die betrachteten Umfangsabschnitte wegen der Krümmung der Zigarettenoberfläche entsprechend ihrer Winkellage zur Achse der Zigarette verkleinert erscheinen. Werden dabei diese Umfangsabschnitte wie üblich aus einer oder mehreren stationären Lichtquellen beleuchtet, so ergibt sich zusätzlich ebenfalls wegen der Krümmung der Zigarettenoberfläche eine ungleichmäßige Ausleuchtung des Inspektionsfeldes. Das führt dazu, daß auch eine einwandfreie Oberfläche nicht gleichmäßig hell erscheint. Insbesondere gilt dies, wenn das Inspektionsfeld nur von einer Richtung her beleuchtet wird, aber auch die Ausleuchtung aus mehreren Richtungen schafft nur eine begrenzte Abhilfe. So ist auch wegen der notwendigerweise ungleichmäßigen Ausleuchtung der Zigarettenoberfläche mit einer geringeren Inspektionsqualität zu rechnen.

Der Erfindung liegt die Aufgabe zugrunde, ein weiteres Verfahren der eingangs beschriebenen Art anzugeben.

Gelöst wird diese Aufgabe erfindungsgemäß mit den im Kennzeichen des Anspruchs 1 enthaltenen Maßnahmen. Dadurch, daß bei aufeinanderfolgenden Abtastvorgängen jeweils Zeilen von in Umfangsrichtung gleicher Breite erfaßt und abgetastet werden, ergeben sich über den ganzen Beobachtungsbereich hinweg gleichmäßigere Prüfbedingungen, eine bessere Erfassung auch kleinerer Fehler und damit zuverlässigere Informationen über den Zustand und die Qualität der Zigarettenoberfläche.

Bevorzugte Ausgestaltungen des Verfahrens nach der Erfindung sind in den Ansprüchen 2 und 3 enthalten, welche Maßnahmen zum Steuern der Aufeinanderfolge der Abtastvorgänge in Abhängigkeit von der Winkellage der jeweiligen Zeilen bzw. Umfangsabschnitte betreffen.

Anspruch 4 enthält Merkmale einer selbständig schutzfähigen unter- und nebengeordneten Lösung der der Erfindung zugrundeliegenden Aufgabe, und Anspruch 5 stellt eine bevorzugte Ausgestaltung des Verfahrens zum Steuern der Lichtintensität gemäß Anspruch 4 dar. Durch die von der Winkelposition der zu prüfenden Umfangsabschnitte abhängige Steuerung der Intensität der Lichtquelle erhalten alle Umfangsabschnitte unabhängig von ihrer relativen Winkellage im wesentlichen dieselbe Leuchtkraft, so daß für die optische Abtastung sehr gleichmäßige Bedingungen geboten werden, die von Zeile zu Zeile vergleichbare Meßergebnisse hoher Sicherheit bei der Fehlererkennung gewährleisten. Die Ansprüche 6 und 7 geben Möglichkeiten der Beleuchtung der Artikeloberfläche in der Prüfzone an.

Die Erfindung stellt ein neues, fortschrittliches Verfahren zum optischen Abtasten der Oberfläche von Zigaretten zur Verfügung. Die zeilenweise Abtastung der Oberfläche in gleichen Abständen erhöht die Empfindlichkeit der Messung besonders in den kritischen Randzonen des Beobachtungsbereichs und gewährleistet die sichere Erfassung auch kleiner Fehler. Die zusätzlich oder alternativ vorgeschlagene Steuerung der Intensität der Beleuchtungsquelle sichert in allen abgetasteten Umfangsbereichen dieselbe Leuchtkraft der Zigarettenoberfläche und schafft dadurch in dieser Hinsicht für die Abtastung aller Umfangsabschnitte gleiche Bedingungen. Das erhöht die Empfindlichkeit der Messung insbesondere in den Randzonen des Beobachtungsbereichs und erhöht die Sicherheit der Fehlererkennung, kurz es ergibt sich eine bessere Inspektionsqualität.

Die Erfindung wird nun anhand der Zeichnung näher erläutert

Es zeigen

Figur 1    eine Darstellung eines Querschnitts einer Zigarette in einer Prüfzone bei einem Abtastvorgang nach dem Stand der Technik,

Figur 2    eine Darstellung des Abtastvorganges nach der Erfindung,

Figur 3    die geometrischen Bedingungen bei der Beleuchtung unterschiedlicher Umfangsflächenabschnitte einer Zigarette und

Figur 4    eine Darstellung des Abtastvorgangs in Verbindung mit einer Steuerung der Beleuchtung nach der Erfindung.

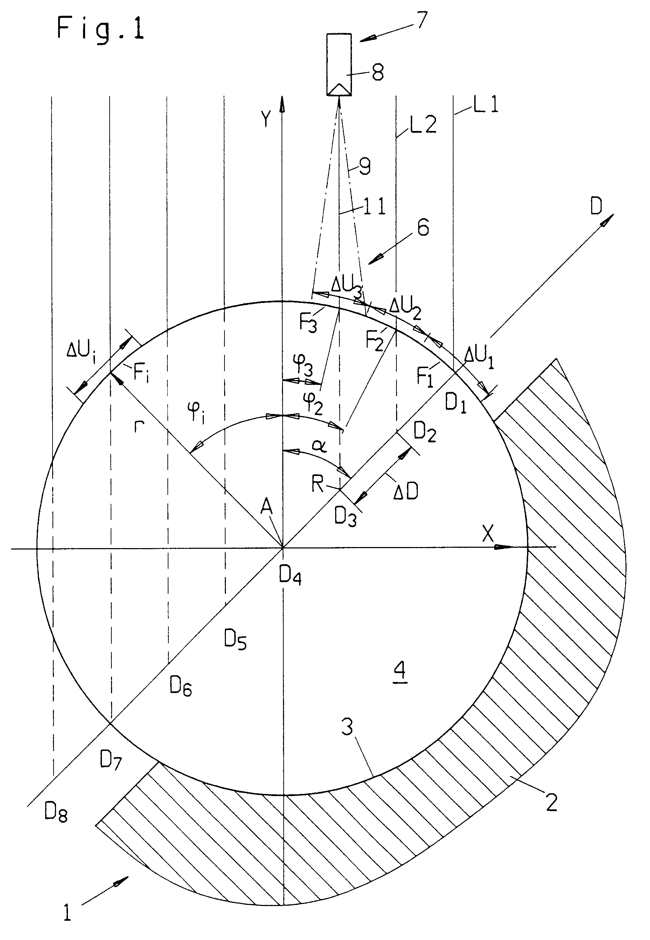

In Figur 1 ist das Prinzip der Prüfung der Umhüllung von Zigaretten oder anderen stabförmigen Artikeln der tabakverarbeitenden Industrie, wie sie heute üblich ist, stark vergrößert dargestellt. Die Figur zeigt einen Ausschnitt eines Förderers 1, beispielsweise einer rotierenden Trommel 2, die in am Umfang vorgesehenen achsparallelen Mulden 3 Zigaretten 4 queraxial durch eine Prüfzone 6 fördert. Die Drehrichtung der Trommel und damit der Förderweg der Zigaretten ist mit D bezeichnet. Der Förderweg D ist die Bewegungsbahn der Achse A der Zigarette. Dieser Förderweg ist für Zigaretten, die auf einer Trommel gefördert werden, ein Kreisbogen. Da der Radius der Trommel aber groß gegen den Radius r der Zigaretten ist, kann der Förderweg der Zigaretten 4 durch die Prüfzone 6 der Einfachheit halber näherungsweise als Gerade betrachtet werden. Der Förderweg D ist daher in der Zeichnung als Gerade dargestellt.

Die Trommel kann Bestandteil einer nicht gezeigten Filteransetzmaschine sein, wie sie beispielsweise in der eingangs erwähnten DE 28 40 617 A1 beschrieben ist. Dabei liegt die Zigarette während der Messung fest in der Mulde 3 und wird dort wie üblich mittels Saugluft gehalten, die durch nicht gezeigte Saugluftbohrungen an die Mulde gelegt wird.

Dem Förderweg D ist eine photoelektrische Zeilen- oder Linienabtasteinrichtung 7 beispielsweise in Gestalt einer Zeilenkamera 8 zugeordnet, die in der Prüfzone 6 wenigstens annähernd achsparallel zum Förderweg D hin ausgerichtet ist. Während des Durchgangs einer Zigarette durch die Prüfzone 6 tastet sie auf der Zigarettenoberfläche in aufeinanderfolgenden Abtastvorgängen nacheinander zeilenförmige Umfangsflächenabschnitte F ab. Die zeilenweise Abtastung der Oberfläche von in ihren Mulden nicht rotierenden Zigaretten ist beispielsweise in der eingangs erwähnten DE 30 30 140 C2 und in der DE 34 20 470 A1 ($\triangleq$ US 4 639 552) beschrieben.

Zur Erleichterung des Verständnisses der geometrischen Zusammenhänge der Oberflächenabtastung von Zigaretten ist ein rechtwinkliges Koordinatensystem X-Y eingetragen, dessen Nullpunkt auf der Zigarettenachse A liegt. Der Förderweg D verläuft als D-Achse im Winkel $\alpha$ zur Y-Achse des Koordinatensystems geneigt durch die Zigarettenachse. Die D-Achse hat ebenfalls in der Zigarettenachse A ihren Nullpunkt. Im Erfassungsbereich 9 der optoelektrischen Abtasteinrichtung 7 ist mit einer parallel zur y-Achse verlaufenden Bezugslinie 11 die Beobachtungsrichtung vorgegeben. Der Schnittpunkt der Bezugslinie 11 mit der Förderrichtung D wird als Bezugspunkt R bezeichnet. Er liegt relativ zur Achse der Trommel Z und zur Maschine ortsfest, während sich das Koordinatensystem mit der Zigarette bewegt.

Wird nun eine zu prüfende Zigarette 4 entlang dem Förderweg D queraxial durch die Prüfzone 6 hindurchgefördert, so werden in bisher üblicher Weise in regelmäßigen Zeitabständen, die gleichmäßigen Förderwegabschnitten $\triangle$ D auf der D-Achse entsprechen, Abtastvorgänge ausgelöst, welche auf der Zigarettenoberfläche Umfangsflächenabschnitte oder Zeilen $F_1'$ $F_2$ usw. erfassen. Dabei erfolgt die erste Messung, sobald der Punkt $D_1$ den Bezugspunkt R erreicht hat, die Achse A der Zigarette also von dem Bezugspunkt gerade den Abstand $D_1$ hat. Der Abtastvorgang erfaßt den Umfangsflächenabschnitt $F_1$. Die Zigarette wird kontinuierlich weiter durch die Prüfzone bewegt. Sobald sie einen Wegabschnitt $\triangle$ D zurückgelegt und der nächste Punkt $D_2$ der Förderwegachse D den stationären Punkt R erreicht hat, die Zigarettenachse sich also im Abstand $D_2$ vom Bezugspunkt R befindet, wird der nächste Abtastvorgang ausgelöst, der den Umfangsflächenabschnitt $F_2$ erfaßt. Die Hilfslinie $L_2$, die die Zuordnung des Punktes $D_2$ zum Umfangsflächenabschnitt $F_2$ kenntlich macht, fällt in diesem Moment mit der Bezugslinie 11 zusammen. Auf dieselbe Weise werden nacheinander jeweils nach dem Zurücklegen eines weiteren Wegabschnittes $\triangle$ D alle weiteren Umfangsabschnitte $F_i$ von der Abtasteinrichtung 7 abgetastet.

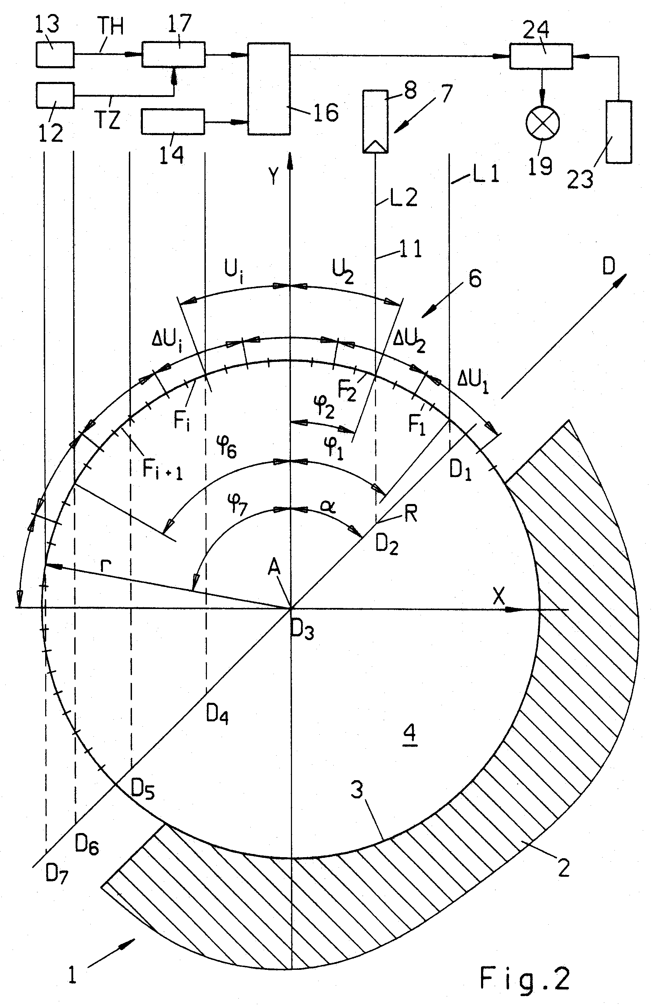

Es zeigt sich nun, daß die in gleichmäßigen Zeitabständen oder in regelmäßigen Wegabschnitten $\triangle$ D abgetasteten Umfangsflächenabschnitte $F_1$ abhängig von ihrer Winkellage $\phi$ am Umfang der Zigarette in Umfangsrichtung gesehen eine unterschiedliche Breite $\triangle U_i$ haben. So ist, was schon die Zeichnung in Figur 1 zeigt, die Breite $\triangle U_1$ des Umfangsflächenabschnitts $F_1$ wesentlich größer als die Breite $\triangle U_3$ des Umfangsflächenabschnitts $F_3$, auf den die Abtasteinrichtung 7 in Figur 1 gerade ausgerichtet ist. Das hat den Nachteil, daß die Erkennbarkeit gleicher Fehler in unterschiedlichen Umfangsflächenabschnitten verschieden ist. Ein Fehler einer bestimmten Größe hat auf das Meßsignal im Umfangsflächenabschnitt $F_1$ einen prozentual kleineren Einfluß als auf das Meßsignal, das bei der Abtastung des Umfangsflächenabschnitts $F_3$ oder $F_4$ erzeugt wird. Somit ergeben sich bei der Prüfung der äußeren Umhüllung einer Zigarette je nach der Winkellage des geprüften Oberflächenabschnitts unterschiedliche Bedingungen, die das Inspektionsergebnis negativ beeinflussen können. Dem wird mit dem in Figur 2 dargestellten Verfahren abgeholfen.

In Figur 2, für welche dieselbe Darstellungsart gewählt wurde wie für Figur 1, sind gleiche Teile mit denselben Bezugszeichen versehen wie in Figur 1. Das neue Verfahren arbeitet ebenfalls mit einer die Zigarettenoberfläche zeilenweise erfassenden Abtasteinrichtung, beispielsweise einer Zeilenkamera 8, die aber jetzt bei allen Messungen Umfangsabschnitte oder Zeilen F derselben Breite abtastet. Die Abtastung der Zigarettenoberfläche erfolgt also unabhängig von der Winkallage der abzutastenden Umfangsflächenabschnitte immer in gleichen Abständen. Dadurch wird die Dichte dar Abtastungen im Vergleich zu den bisher üblichen Verfahren in den Randbereichen gegenüber dem Mittelbereich stark erhöht. Dadurch können auch in den Randabschnitten auftretende Fehler zuverlässiger erfaßt werden, so daß das Inspektionsergebnis insgesamt verbessert wird.

Erreicht wird das durch eine Steuerung der Aufeinanderfolge der zeilenweisen Abtastungen in Abhängigkeit von der Winkellage der zu erfassenden Umfangsflächenabschnitte $F_1$, $F_2$ usw. jeweils gleicher Breite in Umfangsrichtung der Zigarette gesehen.

Die Abtastvorgänge folgen nun nicht mehr, wie bisher üblich, in festen Zeitintervallen aufeinander. Zur Bestimmung der Zeitpunkte der Abtastungen wird jedem Umfangsabschnitt F gleicher Breite $\Delta U$ auf der D-Achse ein Abstand D zur Zigarettenachse zugeordnet, dem ein bestimmter Abtastzeitpunkt entspricht. Die Zuordnung der Abstandswerte $D_1$, $D_2$ usw. zu den betreffenden Umfangsflächenabschnitten bzw. Zeilen $F_1$, $F_2$ usw. ist wieder durch die parallel zur Beobachtungsrichtung 11 der Abtasteinrichtung 7 verlaufenden Hilfslinie $L_1$, $L_2$ usw. kenntlich gemacht. Die Abstandswerte $D_1$, $D_2$ usw. geben die Positionen der Zigaretten in dar Prüfzone an, in denen jeweils die Abtastung einer Zeile F vorgenommen wird. Gelangt eine Zigarette in die Prüfzone und erreicht ihre Achse A den Abstand $D_1$ vom Bezugspunkt R, fällt also $D_1$ mit R zusammen, so erfolgt die Abtastung der Zeile $F_1$. Die Abtastung der nächsten Zeile $F_2$ gleicher Breite $\Delta U$ wird ausgelöst, wenn die Zigarettenachse A vom Bezugspunkt R den Abstand $D_2$ hat, wenn also $D_2$ den Bezugspunkt R erreicht. Diese Situation ist in Figur 2 dargestellt.

Die Abstandswerte $D_1$, $D_2$ usw. ergeben sich aufgrund der herrschenden geometrischen Beziehungen in Abhängigkeit von der Winkellage $\phi_i$ der betrachteten Zellen $F_i$ am Umfang der Zigaretten aus der Gleichung

$$D_i = r \sin \phi_i (\sin \alpha)^{-1}$$

worin $D_i$ die Abstandswerte auf der D-Achse, r der Zigarettenradius, $\phi_i$ die Winkellage der Zeilen, $\alpha$ der Winkel zwischen der Förderrichtung (D-Achse) und der Beobachtungsrichtung (y-Achse) und i $>/=$ 1 sind. Im Bogenmaß steht für den Winkel $\phi_i$ der Ausdruck $U_i/r$, worin $U_i$ am Zigarettenumfang die Länge des Bogens von der y-Achse bis zur Zeile $F_i$, also bis zum Schnittpunkt der Hilfslinie $L_i$ mit dem Zigarettenumfang ist. Damit ist es auf einfache Weise möglich, die Abstandswerte $D_i$ zu bestimmen. Der Zigarettenradius r ist bekannt, der Winkel $\alpha$ zwischen der Beobachtungs- und der Förderrichtung ebenfalls. Gibt man für die Breite $\Delta U$ der Zeile $F_i$ einen Wert vor, beispielsweise $\Delta U = 0,2$ mm, so ist die Länge der Bögen $U_i$ zwischen der y-Achse und dar betreffenden Zeilen $F_i$ durch Addition der Breite $\Delta U$ aller in diesem Bereich liegenden Zeilen zu ermitteln, was mit der oben angegebenen Gleichung unmittelbar zu den Abstandswerten $D_i$ für alle Umfangsflächenabschnitte oder Zeilen $F_i$ führt.

Durch die Bewegung der Zigaretten 4 durch die Prüfzone 6 ist ein Zigarettentakt $T_Z$ vorgegeben, der beispielsweise von einem der Trommel zugeordneten, als Taktgeber 12 wirkenden Drehwinkelaufnehmer erfaßt und für die Steuerung bereitgestellt wird. Diesem relativ niederfrequenten Zigarettentakt $T_Z$ wird durch einen zweiten Taktgeber 13 ein Steuerungstakt $T_H$ höherer Frequenz zugeordnet, so daß jeder Takt des Zigarettentaktes $T_Z$ eine bestimmte Anzahl Takte des Steuerungstaktes $T_H$ umfaßt.

Jedem Abstandswert D entspricht nun ein ganz bestimmter Takt des Steuerungstaktes $T_H$, der durch seine Nummer N in der Folge der zwischen zwei Zigarettentakten liegenden Steuerungstakte identifizierbar ist. Die Nummern $N_i$ aller den Abstandswerten $D_i$ zugeordneten Steuerungstakte werden als Tabelle in einem Speicher 14 hinterlegt, aus dem sie nacheinander an eine Vergleichsanordnung 16 weitergegeben werden. Ein Zähler 17 zählt während des Durchgangs einer Zigarette durch die Prüfzone 6 laufend die Steuerungstakte $T_H$ und gibt den jeweils aktuellen Zählerstand ebenfalls an die Vergleichsanordnung 16 weiter. Sobald der aktuelle Zählerstand mit der Nummer $N_i$ des dem nächsten Abstandswert $D_i$ zugeordneten Taktes übereinstimmt, hat die Zigarettenachse A gerade den Abstand $D_i$ zum Bezugspunkt R erreicht und die Abtastung der zugehörigen Zeile $F_i$ wird durchgeführt. Gleichzeitig wird die nächste im Speicher 14 abgelegte Taktnummer $N_{i+1}$ aufgerufen und an die Vergleichsanordnung 16 übergeben, worauf sich der Vorgang entsprechend wiederholt bis am Ende des Durchgangs einer Zigarette der nächste Zigarettentakt $T_Z$ den Zähler 17 zurücksetzt und für den folgenden Zigarettendurchgang neu startet.

Auf diese Weise ergeben sich die Abstandswerte $D_i$ und mit ihnen die Abtastzeitpunkte in Abhängigkeit von der Winkellage der jeweils abzutastenden Zeilen, so daß alle abgetasteten Zeilen dieselbe Breite und am Umfang der Zigarette denselben Abstand voneinander haben. Dadurch wird die Erfassung auch kleiner Fehler, insbesondere in den Randbereichen verbessert, so daß sich mit den vorgeschlagenen Maßnahmen die Inspektionsqualität erhöht.

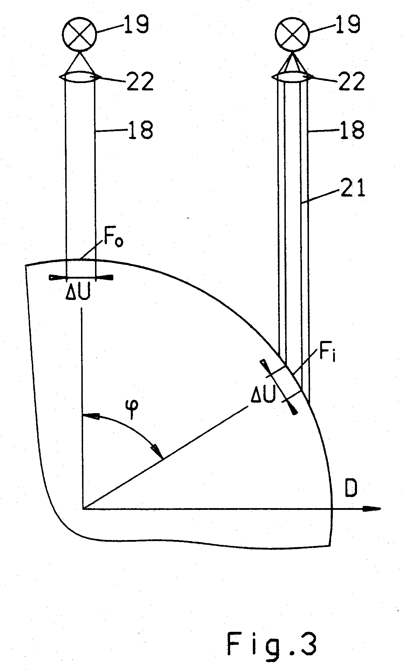

Die Krümmung dar Zigarettenhülle beeinflußt auch die Wirkung der Beleuchtung der Umfangsflächenabschnitte oder Zeilen F in der Prüfzone in Abhängigkeit von ihrer Winkellage $\phi$ am Umfang. Das ist in Figur 3 schematisch dargestellt. Ein Umfangsflächenabschnitt $F_0$ in der Winkellage $\phi = 0$, dessen Fläche also im wesentlichen senkrecht zur Strahlung 18 einer Lichtquelle 19 verläuft, erscheint in der Beleuchtungsrichtung in maximaler Größe und empfängt die maximale Lichtmenge. Ein Umfangsflächenabschnitt $F_i$ derselben Breite $\Delta U$ in einer Winkellage $\phi$, dessen Oberfläche schräg zur Strahlung 18 derselben Lichtquelle 19 liegt, erscheint in dar Beleuchtungsrichtung perspektivisch verkleinert. Er empfängt dementsprechend nur einen Teil 21 der Strahlung 18, die auf der Fläche $F_0$ ankommt. Dem entspricht die Leuchtintensität I auf der Oberfläche eines Umfangsflächenabschnitts F, die durch die Formel $I = I_0 \cos \phi$ gegeben ist, in welcher $I_0$ die Leuchtintensität unter dem Winkel $\phi = 0$ ist. Aufgrund dieses Zusammenhangs ist mit der heute üblichen Beleuchtung dar Zigarettenoberfläche in der Prüfzone mit Strahlung konstanter Intensität eine gleichmäßige Ausleuchtung des Inspektionsfeldes nicht zu erreichen. Auch eine einwandfreie Zigarettenoberfläche erscheint daher in verschiedenen Winkelpositionen der Umfangsflächenabschnitte nicht gleichmäßig hell. Eine nicht optimale Inspektionsqualität ist die Folge. Dabei schafft auch die Ausleuchtung mit mehreren Lichtquellen nur begrenzte Abhilfe.

Um nun die Beleuchtung der Zigarettenoberfläche in der Prüfzone zu verbessern und die Ausleuchtung zu vergleichmäßigen, wird die Strahlungsintensität (Beleuchtungsstärke) B der Lichtquelle beim Durchgang einer Zigarette durch die Prüfzone 6 in Abhängigkeit von der Winkellage $\phi$ des jeweils beleuchteten und abgetasteten Umfangsflächenabschnitts F so verändert, daß die Leuchtstärke I der Zigarettenoberfläche über den Umfang wenigstens angenähert konstant ist.

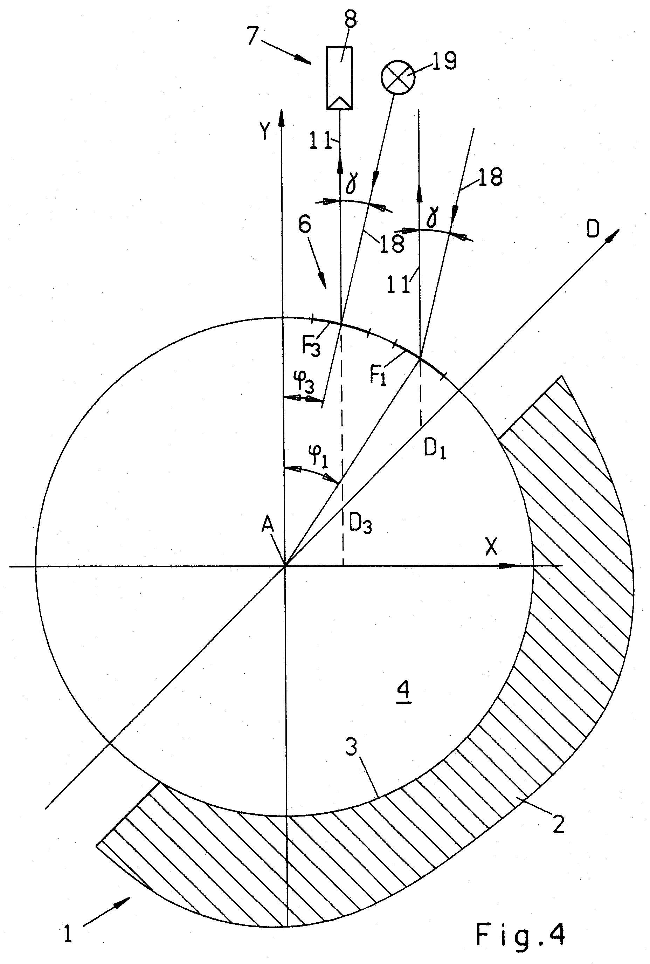

Die Figur 4 zeigt die geometrischen Zusammenhänge, die diesem Vorgehen zugrundeliegen. Dabei ist wieder dieselbe Darstellungsart gewählt, wie in den Figuren 1 und 2 und gleiche Teile sind mit denselben Bezugszeichen verseher wie dort.

Die Lichtquelle 19 ist mittels einer Optik 22, die in Figur 3 schematisch dargestellt ist, zur Prüfzone 6 hin ausgerichtet. Die Beleuchtungsrichtung 18 verläuft in einem Winkel $\gamma$ zur Beobachtungsrichtung 11 bzw. zur y-Achse. Die Lichtquelle 19 ist so aufgebaut, daß sie am Zigarettenumfang jeweils wenigstens eine Zeile F von Zigarettenlänge und der Breite $\Delta U$ möglichst gleichmäßig beleuchtet. Es kann eine Dauerlichtquelle oder auch eine Blitzlampe sein, die immer zu den Abtastzeitpunkten blitzt.

Um zu erreichen, daß die Umfangsfläche der Zigarette 4 während der Messung immer dieselbe Leuchtkraft I aufweist, ist vorgesehen, daß die Beleuchtungsstärke B der Lichtquelle 19 in Abhängigkeit von dar Winkelposition $\phi$ des jeweils in der Prüfzone 6 gerade abgetasteten Umfangsflächenabschnitts F im Sinne konstanter Leuchtkraft I der Umfangsfläche gesteuert wird. Dieser Steuerung wird die Formel zugrundegelegt

$$B_i = B_0 \left(\cos((U_i/r) - \gamma)\right)^{-1}$$

in der $U_i/r$ im Bogenmaß für $\phi$ steht, $B_0$ die Beleuchtungsstärke der Lichtquelle bei senkrechter Beleuchtung der Oberfläche, also in dem Moment, wenn die Winkellage des betreffenden Umfangsflächenabschnitts F gerade $\phi = \gamma$ ist, und $B_i$ die Beleuchtungsstärke beim Durchgang eines aktuellen Umfangsabschnittes $F_i$ durch die Prüfzone ist. $U_i$ ist die Länge des Bogens zwischen der y-Achse und dem Umfangsabschnitt $F_i$ in der Prüfzone, r ist der Artikelradius und $\gamma$ ist dar Winkel zwischen der Beobachtungs- und der Beleuchtungsrichtung.

Jedem abzutastenden Umfangsflächenabschnitt $F_i$ der Breite $\Delta U_i$ wird aufgrund dieser Gleichung ein Wert $B_i$ der Beleuchtungsstärke zugeordnet, der eine konstante Ausleuchtung und gleiche Leuchtkraft I der Zigarettenoberfläche unabhängig von ihrer Neigung zur Beleuchtungsrichtung sicherstellt. Die Werte $B_i$ können beim Durchgang einer Zigarette durch die Prüfzone von der Steuerung laufend berechnet und dar Lichtquelle 19 zur Einstellung der jeweiligen Beleuchtungsstärke vorgegeben werden. Um aber die Steuerung zu entlasten, werden die Werte $B_i$ in einer Speicheranordnung 23 abgelegt, die an eine mit der Vergleichsanordnung 16 verbundene Steueranordnung 24 angeschlossen ist (siehe Figur 2). Erreicht nun eine bestimmte Zeile $F_i$ ihre Abfrageposition in der Prüfzone 6, so wird nicht nur, wie oben beschrieben, ein Abtastvorgang ausgelöst, sondern es wird aus der Speicheranordnung 23 auch der zugehörige Wert $B_i$ der Beleuchtungsstärke abgerufen und von der Steueranordnung 24 der Einstellung der Lichtquelle 19 vorgegeben. Dies widerholt sich Zeile für Zeile bis der ganze Inspektionsbereich einer Zigarette abgetastet ist, so daß die Messung bei optimaler Ausleuchtung des Inspektionsfeldes erfolgt. Zusammen mit der oben beschriebenen Steuerung der Abtastfolge führt das zu einer beträchtlichen Verbesserung der Instektionsqualität.

Allerdings kann die winkelabhängige Steuerung der Beleuchtungsstärke auch unabhängig von der Steuerung der Abtastfolge eingesetzt werden, beispielsweise auch bei der Prüfung der Zigarettenhülle nach dem Stand der Technik.

Um die ganze freiliegende Zigarettenoberfläche prüfen zu können, kann es erforderlich sein, daß in einer gemeinsamen oder mehreren verschiedenen Prüfzonen mehrere Abtasteinrichtungen 7 und mehrere Lichtquellen 19 auf die Zigarette ausgerichtet sind, wie dies z.B. in der oben bereits erwähnten DE 34 20 470 ($\hat{=}$ US 4 639 592) beschrieben ist. Das Vorgehen nach der Erfindung kann für alle Abtasteinrichtungen und Lichtquellen eingesetzt werden.

**Patentansprüche**

1. Verfahren zum optischen Prüfen der Umhüllung von stabförmigen Artikeln der tabakverarbeitenden Industrie, insbesondere von Zigaretten, bei dem die Artikel entlang einem Förderweg queraxial durch eine Prüfzone gefördert werden, die Oberfläche der Artikel beim Durchgang durch die Prüfzone beleuchtet wird und in der Prüfzone in aufeinderfolgenden Meßvorgängen achsparallele zeilenförmige Umfangsabschnitte der Oberfläche jedes Artikels abgetastet und dem am jeweiligen Umfangsabschnitt reflektierten Licht entsprechende, den Zustand dar Artikeloberfläche repräsentierende Meßsignale erzeugt werden, dadurch gekennzeichnet, daß an der Oberfläche der Artikel in Umfangsrichtung gesehen Umfangsflächenabschnitte (F) gleicher Breite ($\Delta$ U) abgetastet werden.

2. Verfahren nach Anspruch 1, dadurch gekennzeichnet, daß die Aufeinanderfolge der Meßvorgänge beim Durchgang eines Artikels (4) durch die Prüfzone (6) in Abhängigkeit von den Winkelpositionen ($\phi_i$) der abgetasteten Umfangsflächenabschnitte ($F_i$) gleicher Breite ($\Delta U_i$) am Artikelumfang gesteuert wird.

3. Verfahren nach Anspruch 1 oder 2, dadurch gekennzeichnet, daß der Förderweg (D) der Artikel (4) unter einem Winkel $\alpha$ zur Beobachtungsrichtung (11) geneigt durch die Prüfzone (6) verläuft, daß der Prüfzone am Förderweg ein ortsfester Bezugspunkt (R) zugeordnet wird und daß jeweils ein Meßvorgang durchgeführt wird, sobald der Abstand (D) der Artikelachse (A) vom Bezugspunkt (R) einen durch die Formel $D_i = r \sin \phi_i (\sin \alpha)^{-1}$ bestimmten Wert annimmt, in welcher $\phi_i$ die diskreten Winkelpositionen der gleich breiten Umfangsflächenabschnitte $F_i$ am Artikelumfang, r der Radius des Artikels, $\alpha$ der Neigungswinkel des Förderwegs zur Beobachtungsrichtung und i eine ganze Zahl größer oder gleich 1 ist.

4. Verfahren nach dem Oberbegriff des Anspruchs 1 oder einem der Ansprüche 1 bis 3, dadurch gekennzeichnet, daß die Beleuchtungsstärke (B) einer die Artikeloberfläche in der Prüfzone beleuchtenden Lichtquelle (19) in Abhängigkeit von der Winkelposition $\phi$ des jeweils die Prüfzone (6) durchlaufenden Umfangsflächenabschnitts ($F_i$) am Artikelumfang im Sinne konstanter Leuchtstärke (I) der Oberfläche des betreffenden Umfangsflächenabschnitts (F) gesteuert wird.

5. Verfahren nach Anspruch 4, dadurch gekennzeichnet, daß die Beleuchtungsstärke (B) der Lichtquelle (19) beim Durchgang aufeinanderfolgender Umfangsflächenabschnitte (F) durch die Prüfzone (6) gemäß der Formel

$$B_i = B_0 \left( \cos \left( (U_i/r) - \gamma \right) \right)^{-1}$$

gesteuert wird, wobei $B_0$ die Beleuchtungsstärke bei die Artikelachse kreuzender Beleuchtungsrichtung ($U_i/r - \gamma = 0$), $B_i$ die Beleuchtungsstärke beim Durchgang eines aktuellen Umfangsabschnitts $F_i$ durch die Prüfzone, $U_i$ die Länge des Bogens zwischen der y-Achse und dem Umfangsabschnitt $F_i$ in der Prüfzone, r der Artikelradius, $\gamma$ der Winkel zwischen der Beobachtungs- und der Beleuchtungsrichtung und i eine ganze Zahl größer oder gleich 1 ist.

6. Verfahren nach einem der Ansprüche 1 bis 5, dadurch gekennzeichnet, daß die Artikeloberfläche in der Prüfzone (6) mit einer Dauerlichtlampe stauerbarer Beleuchtungsstärke B beleuchtet wird.

7. Verfahren nach einem der Ansprüche 1 bis 5, dadurch gekennzeichnet, daß die Artikeloberfläche in der Prüfzone mit einer Blitzlichtlampe steuerbarer Beleuchtungsstärke B beleuchtet wird.

# Fig.1

Fig.2

Fig.3

Fig.4

Europäisches
Patentamt

Nummer der Anmeldung

EP 96 11 1800

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DE-A-30 30 140 (B.A.T. CIGARETTEN-FABRIKEN) <br> * das ganze Dokument * <br> --- | 1 | A24C5/34 |
| A,D | DE-A-34 20 470 (HAUNI-WERKE KÖRBER) <br> * das ganze Dokument * <br> --- | 1 | |
| A | GB-A-2 256 355 (G.D. SOCIETA PER AZIONI) <br> * das ganze Dokument * <br> ----- | 1 | |

| | RECHERCHIERTE SACHGEBIETE (Int.Cl.6) |
|---|---|
| | A24C <br> G01N |

Der vorliegende Recherchenbericht wurde für alle Patentansprüche erstellt

| Recherchenort | Abschlußdatum der Recherche | Prüfer |
|---|---|---|
| DEN HAAG | 21.November 1996 | Riegel, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P04C03)